# EUROPEAN PATENT APPLICATION

(11) **EP 2 453 208 A1**
(43) Date of publication of application: **16.05.2012**
(21) Application number: 10191178.2
(22) Date of filing: 15.11.2010
(51) Int. Cl.: G01C 21/36

(54) **Navigation system**

(71) Applicant: Harman Becker Automotive Systems GmbH, 76307 Karlsbad (DE)
(72) Inventor: Rössger, Peter, 72631, Aichtal (DE); Preissner, Olaf, 73230, Kirchheim unter Teck. (DE); Förster, Bianca, 72196 Heimsheim (DE)
(74) Representative: Sticht, Andreas

(57) **Abstract**

A navigation system comprises a map memory (11), a processing unit (13) and a display (15). The processing unit (13) is configured to simultaneously display a first portion of a map stored in said map memory (11) using a first perspective and a second portion of the map using a second perspective different from said first perspective on the display (15).

## Description

### Technical Field

The application relates to navigation systems and corresponding methods for displaying maps on navigation systems.

### Background Art

Navigation systems nowadays are commonly used to help finding a way to a specific location. Such navigation systems may, for example, be used in cars or other automobiles, but may also be used for other vehicle like airplanes or also for pedestrians.

Many navigation systems comprise a display on which a map of the surroundings of the user of the navigation system, e.g. of the vehicle, is displayed in some manner, and a route to be taken may be highlighted in the map. One common way to display such maps is a two-dimensional display, i.e. the map is displayed from a bird's eye view. In such cases, a rather large part of the surroundings of a user can be shown and previews for larger distances are possible.

Another way to display maps is in a three-dimensional view, for example, from a perspective at least approximating the real perspective of the user of the navigation system. Such a way of displaying the map is more intuitive and is generally better suited to provide a user with more detailed information on the streets, buildings and/or point of interests around the user. On the other hand, generally a smaller part of the surroundings of the user can be displayed. Previews for larger travelling distances are hard to realize.

Therefore, a need exists for improved ways of displaying maps on navigation systems and corresponding navigation systems.

### Short Summary of the Invention

According to embodiments, this need is addressed by a method and a navigation system as defined in the independent claims. The dependent claims define embodiments.

A method according to an embodiment, comprises simultaneously displaying a first portion of a map using a first perspective and displaying a second portion of said map using a second perspective different from the first perspective.

By displaying different portions of a map using different perspectives, advantages of different perspectives as regards, for example, the capability of providing an overview or an intuitive display of a map may be combined.

The first portion and the second portion may be adjacent portions of said map and may be displayed adjacent to each other, in particular as being merged at a common border, such that essentially a single map is displayed with different perspectives.

The first perspective may be a 3D perspective, and the second perspective may be a 2D perspective. In such embodiments, the 2D perspective may be used to provide an overview over a larger area, and the 3D perspective may be used to provide an intuitive image of surroundings of a user.

In other embodiments, the first perspective may be a perspective from an elevation angle smaller than an elevation angle of the second perspective. In this respect, an elevation angle of 90° corresponds to a vertical down-view, i.e. essentially a 2D perspective, while an elevation angle of 0° corresponds to a view from ground-level.

In an embodiment of the method, a border region between the first portion and the second portion may be displayed with a perspective gradually varying from the first perspective to the second perspective to provide a smooth change from the first map portion to the second map portion.

The second map portion may be a map portion showing the immediate surroundings of a user.

In an embodiment, a route a user is to take may be displayed extending from the second map portion to the first map portion and/or vice versa. Therefore, both map portions may be used for showing a route, for example, in a navigation system.

The displayed route may be displayed in a manner that it remains at least partially visible even if hidden by map elements in the respective perspective. For example, a semi-transparent portion may be displayed above the route in case of a 3D perspective.

Additional elements providing additional information may be displayed, for example, such additional elements may relate to music reproduction like receiving radio stations or playing compact discs or MP3 songs or may also relate to internet information.

A navigation system according to an embodiment comprises a display, a processing unit and a map memory storing at least one map. The processing unit is configured to display a first portion of a map stored in the map memory on the display using a first perspective and simultaneously displaying a second portion of the map stored in the map memory using a second perspective. Through displaying different portions of a map with different perspectives, advantages of different perspectives may be combined.

It is to be noted that the term "navigation system" applies both to navigation systems fixedly built in a vehicle and to mobile navigation systems. Moreover, the term not only applies to dedicated navigation systems, but also to multi-purpose devices usable as navigation systems. For example, many modern mobile phones may be used as navigation systems. The term "navigation system" may not only apply to land based systems, but also to nautical and aeronautical systems.

The first and second portions may be adjacent to each other in said map and may be displayed adjacent to each other on said display. In this case, the first portion and second portion may essentially be used as a single map.

The first perspective may be a 3D perspective, and the second perspective may be a 2D perspective. In such embodiments, the first portion may serve to provide an overview over a larger area, and the second portion may serve to provide an image of the surroundings of a user of the navigation system. In other embodiments, the first perspective and the second perspective may both be 3D perspectives with different elevation angles.

In an embodiment, the navigation system comprises a positioning device configured to determine a position of the navigation system. In such an embodiment, the processing unit may be configured to calculate a route from a current position of the navigation system to a destination position and to display at least part of the route on the first and second map portions. A displaying of the route may be continuous over the first and second map portions in such embodiments.

The route may be displayed in a manner to make the route discernable even when it is hidden by map elements like buildings. For example, a semi-transparent portion may be displayed on top of the route when the respective first or second perspective is a 3D perspective.

The processing unit may be configured to display additional elements providing additional information on the display.

### Brief Description of the Drawings

Embodiments of the invention will be described with reference to the accompanying drawings.
Fig. 1 is a schematic block diagram of a navigation system according to an embodiment.
Fig. 2 is an illustrative example of a map being displayed according to an embodiment.
Fig. 3 is a further illustrative example of a map being displayed according to another embodiment.
Fig. 4 is an illustrative example of a map being displayed according to another embodiment.
Fig. 5 is an illustrative example of a map being displayed according to a further embodiment.
Fig. 6 is a flow chart representation of a method according to an embodiment.

### Detailed Description of Preferred Embodiments

Embodiments of the invention will be described with reference to the drawings. It should be noted that features of different embodiments described may be combined with each other unless specifically stated otherwise.

In the following, various embodiments of navigation systems and methods for displaying maps thereon will be described. It should be noted that in the context of this application, the term "navigation system" not only relates to dedicated navigation systems, but generally relates to devices usable as navigation systems. For example, many modern mobile phones or also computers may be used as navigation systems. The term "navigation system" may not only apply to land based systems, but also to nautical and aeronautical systems Therefore, the term "navigation system" generally relates to any kind of electronic device which may assist a user in finding a way to a particular destination.

On such navigation systems, maps often may be shown on a corresponding display. The maps may be shown with a certain perspective, for example a two-dimensional perspective (2D) corresponding to a view directly from above or a three-dimensional (3D) perspective corresponding to a view from an acute viewing angle with respect to ground. The viewing angle with respect to ground is sometimes also referred to as elevation angle. Therefore, an elevation angle of 90° would correspond to a 2D perspective, i.e. a view from directly above, while an elevation angle of 0° would correspond to a view from ground level.

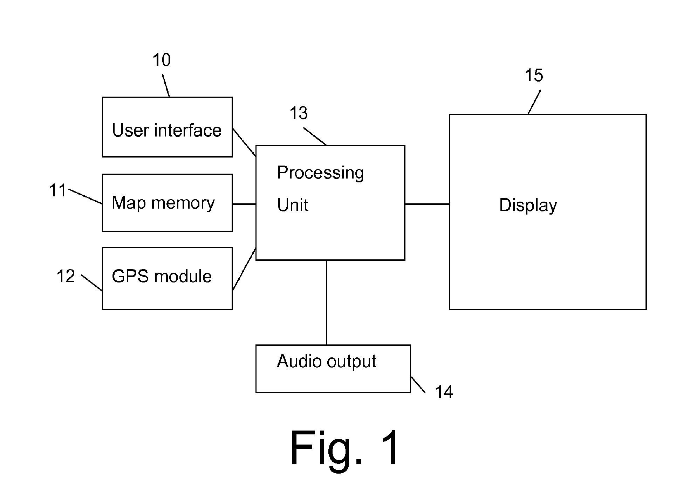

Fig. 1 shows a schematic block diagram of a navigation system according to an embodiment.

The navigation system shown in Fig. 1 comprises a user interface 10, a map memory 11, a GPS module 12, a processing unit 13, an audio output 14 and a display 15. Processing unit 13 controls and coordinates user interface 10, map memory 11, GPS module 12, audio output 14 and display 15 and may comprise for example one or more microprocessors, memory like read only memory or random access memory, and/or logic circuitry to perform the functions described in the following.

User interface 10 enables a user to input data into the device. User interface 10 may for example comprise a voice interface, i.e. such that the navigation system reacts to spoken words from a user, and/or keys. In some embodiments, display 15 may be touch-sensitive and in this respect also be part of or form the complete user interface 10, a user being able to input data by touching the display at appropriate places in this case. For example, a user may use user interface 10 to input a desired destination.

In map memory 11, one or more maps are stored. Map memory 11 may be any kind of storage device suitable for storing a map, and may for example comprise random access memory, flash memory, read only memory and/or data carriers like CDs or DVDs. It should be noted that memory chips may be built in the navigation system, but may also be configured to be removable from the navigation system, for example in the form of memory cards. GPS module 12 is an example for a positioning device and is configured to receive GPS (Global Positioning System) signals and to determine a position of the navigation system on Fig. 1. By using data from the one or more maps stored in map memory 11 and the current position determined by GPS module 12, processing unit 13 may calculate a route to the above-mentioned destination input by a user via user interface 10. Processing unit 13 then displays portions of the one or more maps stored in map memory 11 together with at least a part of the calculated route on display 15. In embodiments, as will be explained below in more detail, different portions of the map are displayed in different perspectives. For example, a portion of a map showing the surroundings of the navigation system may be displayed in a three-dimensional (3D) manner, whereas portions of the map relating to parts of the calculated route further away from the current destination may be displayed in a two-dimensional (2D) manner. The portions displayed may be continuously updated based on a change of position as determined by GPS module 12. In addition to displaying the route on display 15, processing unit 13 may also give directions to a user via audio output 14, for example "turn right", "turn left" and the like.

It should be noted that the diagram of Fig. 1 is only a schematic view showing elements helpful for the understanding of embodiments of the present invention, but is not to be regarded as an exhaustive showing of all possible elements of a navigation system. In particular, in case a navigation system is implemented as a multi-purpose device, for example a mobile phone or also a combined navigation system/music reproduction device, additional elements for implementing additional functions may be present. The term "navigation system" may not only apply to land based systems, but also to nautical and aeronautical systems Also, while a GPS module 12 is shown for determining the position of the navigation system, in other embodiments other components for determining the position may be additionally or alternatively present, for example devices for determining the position based on other satellite navigation signals like Galileo signals, for determining a position based on signals like mobile phone signals and/or for determining the position based on data from a vehicle were the navigation system is incorporated, for example speed data.

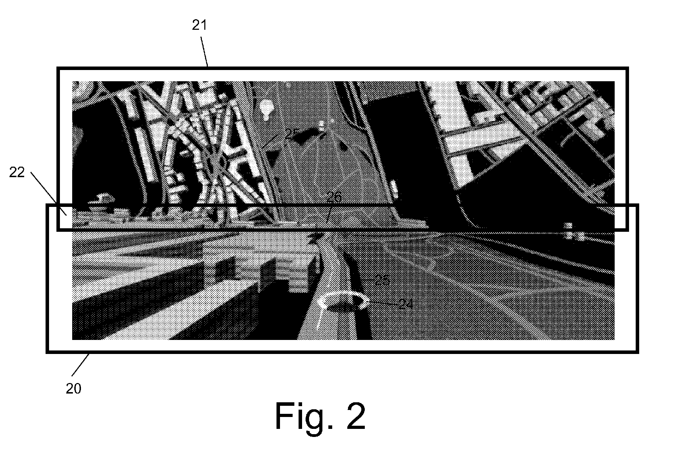

Next, with reference to Figs. 2-5 various possibilities for displaying two different map portions with two different perspectives will be explained. These possibilities may for example be implemented in the embodiment of Fig. 1, but are not restricted thereto and may generally be used in navigation systems.

In Fig. 2 an illustrative example for a map being displayed in accordance with some embodiments is shown. The map shown in Fig. 2 comprises a first portion 20 which is displayed in a three-dimensional manner and a second portion 21 which is displayed essentially in a two-dimensional manner. A portion 21 at a boundary between first portion 20 and second portion 21 is designed such that the perspective gradually changes, which gives the impression of a curve. In other words, in portion 22 the elevation angle gradually changes from the elevation angle used for portion 20, which may for example be between 5° and 40°, to the elevation angle used in portion 21, which may be approximately 90°.

A portion of a route to be taken by a user of the navigation system to reach his or her destination is generally labelled 25 and is shown both in portion 20 and in portion 21. As first portions 20 and second portion 21 are provided in a seamless, merged manner adjacent to each other, the route to be taken can be tracked over the whole display.

Furthermore, as a cursor 24 the location of the navigation system, which corresponds to a location of a vehicle incorporating the navigation system in the example shown, is depicted.

In particular in first portion 20, i.e. the 3D portion, it may happen that route 25 is "hidden" behind map elements like buildings. To make the route visible also in such instances, in the example of Fig. 2 a "glow" 26, i.e. a semi-transparent portion 26, is provided "above" route 25, which glow 26 remains visible behind e.g. buildings such that at least the approximate course of the route can be discerned.

In the example of Fig. 2, as the position of the navigation system is marked by cursor 24 changes, the map portions displayed also change. For example, when cursor 24 moves along route 25, the map portion may change accordingly, such that the surroundings of cursor 24 are always shown in first portion 20 in a three-dimensional manner, and portions further away on the route 25 are shown in second portion 21 in a two-dimensional manner.

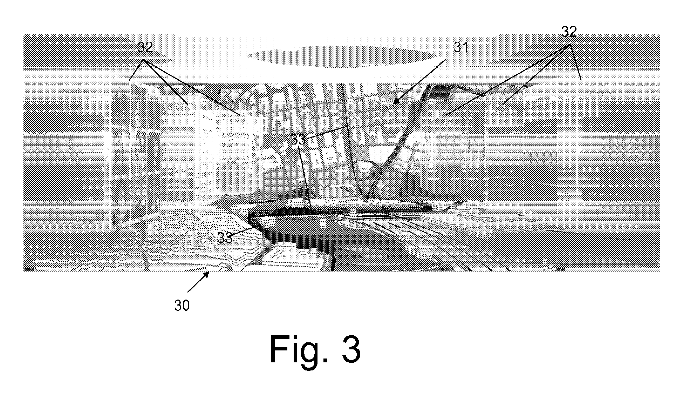

In the example of Fig. 2, only the map portions together with the route are displayed. In other embodiments, additional information may be shown on a display. An illustrative example for such additional information is shown in Fig. 3.

In Fig. 3, again a first portion 30 of a map is shown in a three-dimensional manner, and a second portion 31 of the map is shown in a two-dimensional manner, the first portion 30 and the second portion 31 being adjacent to each other and are merged at their boundaries in a seamless manner. A route 33 to be taken is also shown, with a "glow" as explained with reference to Fig. 2 being added above the route. Additionally, cubes 32 are shown which provide additional information, for example regarding radio stations, music being reproducible for example from CDs or from stored MP3 files, system information and internet information, information regarding contacts and information regarding mail or other internet services. These types of information only serve as examples, and any desired information may be depicted.

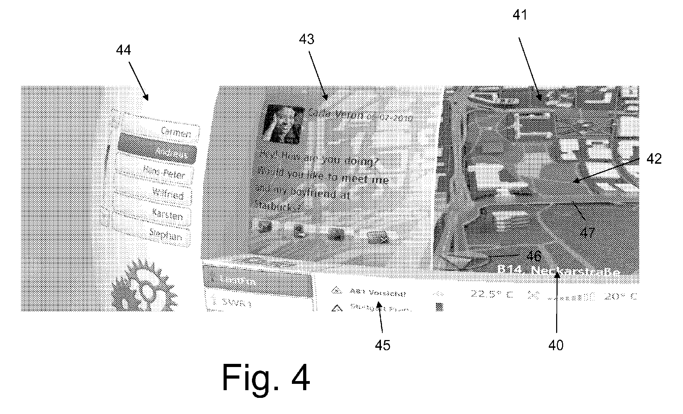

A further illustrative example of displaying map portions is shown in Fig. 4. In Fig. 4, a first portion 40 is displayed in a three-dimensional manner, and a second portion 41 is displayed in a two-dimensional manner. In the example shown in Fig. 4, a transition between first portion 40 and second portion 41 in a region labelled 42 is comparatively slow, i.e. the change of perspective gradually extends over a larger area than for example in Fig. 2 or 3, giving the impression of a rather large radius for the change.

In the display as shown in an illustrative manner in Fig. 4, besides the map at a lower portion 45 for example traffic information, information regarding temperature and information regarding a received radio station are shown, and in a portion 44 left of the map contacts are shown. Furthermore, a portion 43 overlays the map in a semi-transparent manner and is used for showing a received message, for example a SMS (Short Message Service).

In first map portion 40 and second map portion 41, a route 47 is shown, and a cursor 46 shows a current position of the navigation system, which corresponds to a position of a vehicle incorporating the navigation system.

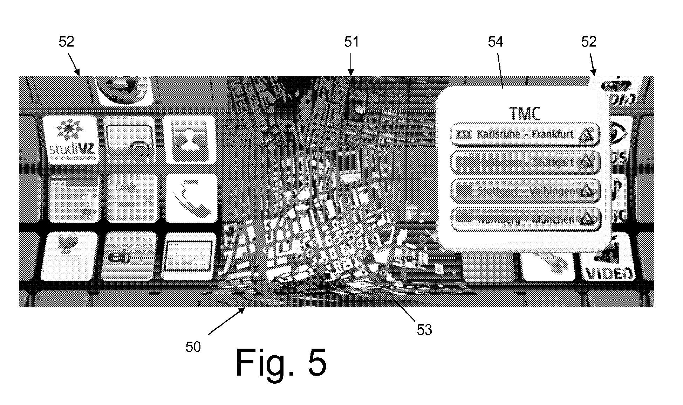

In Fig. 5, a further illustrative example of displaying maps in accordance with some embodiments of the present invention is shown. At a first portion a first map portion 50 is shown in a three-dimensional manner with a low elevation angle, for example an elevation angle between 5° and 40°. A second map portion 51 in this case is also shown in a three-dimensional perspective, with a higher elevation angle, for example an elevation angle in the range between 60° and 90°, preferably between 70° and 85°.

Moreover, in the example of Fig. 5 the size of the second portion is considerably larger than the size of the first portion, whereas for example in the example of Fig. 4 the size of the first portion exceeds the size of the second portion, to give an example for different positioning between first portion and second portion, which positioning can be chosen in any desired manner. A route to be taken is shown in first portion 50 and second portion 51 and is generally labelled 53 in Fig. 5.

On both sides of first map portion 50 and second map portion 51, additional information 52 is shown in the form of tabs on an imagined cylindrical surface. The additional information may for example relate to internet, e-mail, phone calls, radio station, music reproduction, video reproduction or system information. Furthermore, an overlay 54 shows traffic information.

As can be seen from the examples shown in Figs. 2-5, different map portions with different perspectives may be displayed in a variety of manners. It is also to be noted that the examples shown are not exhaustive, and other arrangements are equally possible.

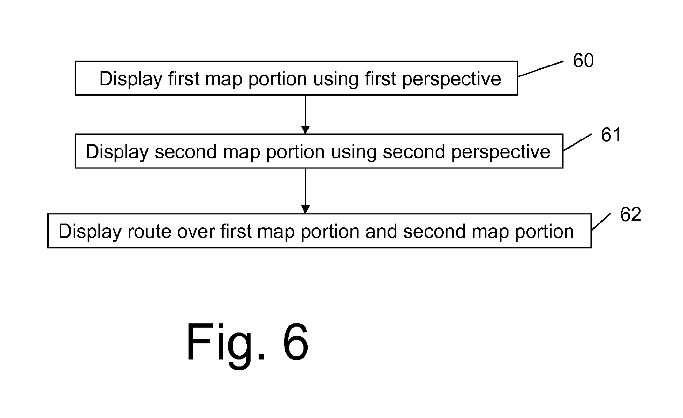

In Fig. 6, a flow chart representing a method according to an embodiment is shown. At 60, a first map portion using a first perspective is displayed. The first perspective may be a 3D perspective, in particular a 3D perspective with an elevation angle between 5° and 40°.

At 61, simultaneously a second map portion using a second perspective is displayed. The second perspective may use an elevation angle higher than the elevation angle of the first perspective, for example an elevation angle between 60° and 90°, 90° corresponding to a 2D perspective. The first map portion and the second map portion may be displayed merging at a common border, optionally with a transition region where the perspective gradually changes.

At 62, a route is displayed over the first map portion and the second map portion.

The above-described embodiments are not to be construed as limiting the scope of the invention.

## Claims

1. A method for displaying a map on a navigation system, comprising:
simultaneously displaying a first portion (20; 30; 40; 50) of a map using a first perspective; and
displaying a second portion (21; 31; 41; 51) of said map using a second perspective different from said first perspective.

2. The method of claim 1, wherein said first perspective has an elevation angle of view smaller than an elevation angle of view of said second perspective.

3. The method of claim 2, wherein said second perspective is a two-dimensional perspective.

4. The method of claim 1, wherein said first map portion (20; 30; 40; 50) and said second map portion (21; 31; 41; 51) are adjacent map portions in said map and are displayed adjacent to each other.

5. The method of claim 4, wherein said first map portion (20; 30; 40; 50) and said second map portion (21; 31; 41; 51) are merged in a seamless manner at a common border.

6. The method of claim 5, wherein a perspective gradually changes from said first perspective to said second perspective at said common border.

7. The method of any one of claims 1-6,
further comprising displaying at least part of a route (25; 33; 47; 53) in said first map portion and said second map portion.

8. The method of claim 7, wherein said displaying said part of said route comprises displaying said route with a marking portion (26) displayed above said route to make the route discernable when hidden by map elements.

9. The method of any one of claims 1-8, further comprising displaying additional elements providing additional information to a user.

10. A navigation system, comprising:
a map memory (11) configured to store a map,
a processing unit (13), and
a display (15),
wherein said processing unit (13) is configured to simultaneously display a first portion (20; 30; 40; 50) of a map stored in said map memory (11) using a first perspective and a second portion (21; 31; 41; 51) of said map using a second perspective different from said first perspective on said display (15).

11. The system of claim 10, wherein said first perspective has an elevation angle of view smaller than an elevation angle of view of said second perspective.

12. The system of claim 10 or 11, wherein said first map portion (20; 30; 40; 50) and said second map portion (21; 31; 41; 51) are adjacent map portions in said map, and
wherein said processing unit (13) is configured to display said first map portion (20; 30; 40; 50) and said second map portion (21; 31; 41; 51) adjacent to each other and merged in a seamless manner at a common border on said display (15).

13. The system of any one of claims 10-12, further comprising a positioning device (12) configured to determine a position of said navigation system, wherein said processing unit (13) is further configured to calculate a route to a destination based on said map and said determined position and to display at least part of said route in said first map portion (20; 30; 40; 50) and said second map portion (21; 31; 41; 51).

14. The sytem of any one of claims 10-13, wherein the device is configured to execute the method according to any one of claims 1-9.

15. A vehicle, comprising a navigation system as defined in any one of claims 10-14.
